# EUROPEAN PATENT SPECIFICATION

(11) **EP 1 136 837 B1**
(45) Date of publication and mention of the grant of the patent: **28.06.2006**
(21) Application number: 01302112.6
(22) Date of filing: 08.03.2001
(51) Int. Cl.: G01S 5/02, G01S 1/04

(54) **Positioning system for a mobile unit**
Ortungssystem für mobile Objekte
Système de positionnement pour des objets mobiles

(30) Priority: 21.03.2000 JP 2000078150
(43) Date of publication of application: 26.09.2001
(73) Proprietor: Pioneer Corporation, Meguro-ku, Tokyo (JP)
(72) Inventor: Tanoue, Mutsurou, c/o Pioneer Corporation, Kawagoe-shi, Saitama (JP); Yokoyama, Kenji, c/o Pioneer Corporation, Kawagoe-shi, Saitama (JP); Yamada, Yoshikazu, c/o Pioneer Corporation, Kawagoe-shi, Saitama (JP); Takei, Katsumi, u, c/o Pioneer Corporation, Kawagoe-shi, Saitama (JP); Endo, Isao, c/o Pioneer Corporation, Kawagoe-shi, Saitama (JP); Kiuchi, Noriyoshi, c/o Pioneer Corporation, Kawagoe-shi, Saitama (JP); Murata, Kazuo, c/o Pioneer Corporation, Kawagoe-shi, Saitama (JP); Kimura, Takuji, c/o Pioneer Corporation, Kawagoe-shi, Saitama (JP)
(74) Representative: Haley, Stephen

(56) References cited:
- EP-A- 0 735 380
- WO-A-99/53272
- US-A- 4 535 334

## Description

The present invention relates to a mobile system having position measuring means for measuring the current position of a mobile unit, which is represented by a GPS (Global Positioning System) for measuring the latitude, longitude and altitude of the mobile unit.

In recent years, a mobile system has spread in which the current position of a mobile unit is measured, the map data is read from an information recording medium on the basis of its result of positioning, and its map with a mark indicating the current position of the mobile unit is displayed on a display device such as an LCD, as represented by the vehicle mounted navigation system.

Examples of position measuring means for measuring the current position of the mobile unit which is used for such mobile system may include a GPS receiver in the Global Positioning System, and stand-alone position measuring means employing a transit distance sensor and a gyro.

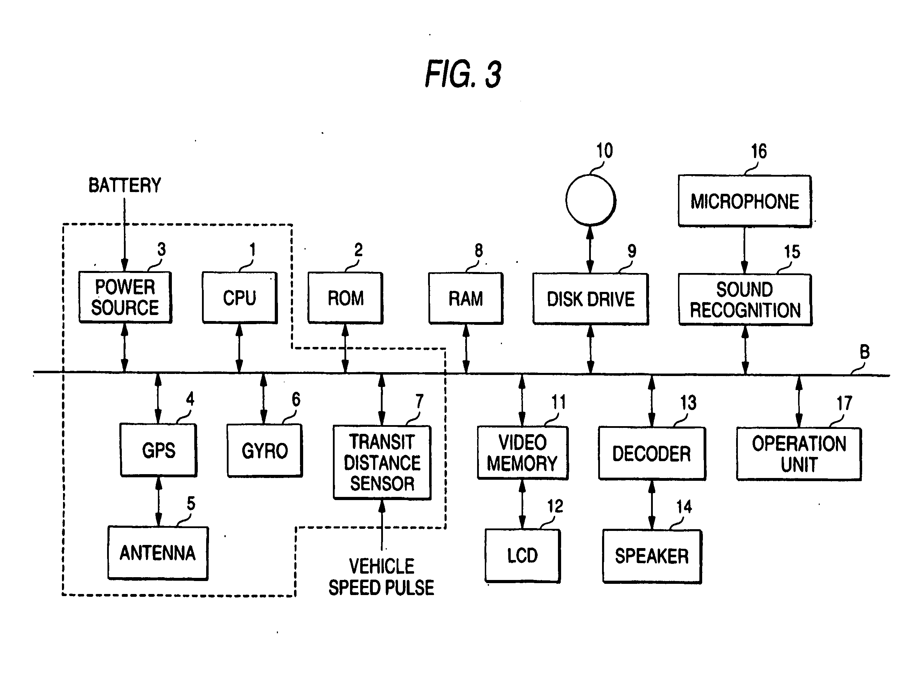

Referring to Fig. 3, a vehicle mounted navigation system (hereinafter referred to as a main system) will be described below as one example of the mobile system having mounted position measuringmeans. In Fig. 3, a CPU 1 as control means is a controller for making the basic control of this entire main system, and is connected via a bus line B with each system element. A ROM 2 is non-volatile storage means for storing a control program for effecting a control operation of the CPU 1, and the image data for constructing an initial screen which is first displayed on display means, when the main system is turned on. A power source 3 is electric power supply means connected to a battery mounted on the vehicle, and supplying the electric power to the main system under the control of the CPU 1.

This main system has a GPS receiver 4 as one of position measuring means for measuring the current position of the mobile unit. This GPS receiver 4 is to receive at an antenna 5 mounted on the vehicle a radio wave output from a plurality of GPS satellites around an orbit at an altitude of 20, 183Km from the surface of the earth, and execute a predetermined positioning calculation by the use of this received signal to measure the latitude, longitude and altitude of the current position. This GPS receiver 4 comprises a high frequency amplification circuit, a frequency conversion circuit and a noise reduction circuit.

The gyro 6 and the transit distance sensor 7 measure the current position of the mobile unit, in place of the GPS receiver 4, in the case where the GPS receiver 4 can not acquire the radio wave output from the GPS satellites, and is provided on this main system as another stand-alone position measuring means . The positional information such as latitude, longitude and altitude, which is measured by the position measuring means comprised of the GPS receiver 4, the gyro 6 and the transit distance sensor 7, is stored in a RAM 8 at any time. This RAM 8 also stores the information of the operation environment which has been set in this system by the user.

A disk drive 9 is to read various sorts of data from a disk recording medium 10 for storing the map data and a part of the control program on which the control operation of the CPU 1 is based. In recent years, the disk recording medium 10 has a larger capacity of stored information, and stores the maps in all scales over the wide area.

A video memory 11 is to store temporarily the display image data to display a map read from the disk recording medium 10 by the disk drive 9 or a current position mark indicating the current position of the vehicle measured by position measuring means, as the visual information, on an LCD 12 as display means.

A decoder 13 decodes the sound information memorized in the ROM 2 or RAM 8 such as a route guide voice or various kinds of warnings, and a speaker 14 outputs this decoded voice information as the aural information.

Voice recognition means 15 is means for recognizing a voice issued by the user and collected by a microphone 16. By issuing a particular command, the user can control the operation of this main system via this voice recognition means 15. Also, an operation unit 17 is one of the operation instructing means for the user to control the operation of the main system, and is comprised of a wireless remote controller making use of the infrared ray.

The operation of the main system configured in the above way will be described below. If the user starts the vehicle, an electric power is supplied from the battery mounted on the vehicle via the power source 3 to this main system, so that each element of the main system is activated under the control of the CPU 1.

The GPS receiver 4 reads the positioning data obtained at the previous positioning from the RAM 8, and starts to measure the current position based on that positioning data. The disk drive 9 reads the map data including its current position from the disk recording medium 10 on the basis of the current position measured by the GPS receiver 4. A video memory 11 is supplied with the read map and the current position mark indicating the current position of the vehicle measured by the position measuring means, which are displayed on the LCD 12 and transmitted as the visual information to the user.

In this way, the user can get immediately the moving situation of the vehicle which is changing from time to time by seeing the LCD 12. The scale of the map displayed or the display area is changed appropriately on the basis of the voice content issued by the user or the operation instruction by the operation unit 17, so that the user can acquire the proper information in accordance with the situation.

In a mobile system for measuring the current position of a mobile unit as represented by the vehicle mounted navigation system, if the supply of an electric power is started to the system, the measurement of the current position is automatically started, and if the supply of electric power is stopped, the measurement of the current position is automatically stopped.

If an electric power is supplied to the system, the GPS receiver 4 starts the measurement. At this time, the supplement of a plurality of GPS satellites and the positioning calculation with the radio wave received from the supplemented GPS satellites are required, whereby the current position can be only measured in about several to several tens seconds since the electric power is supplied to the system.

With the gyro employed as the stand-alone position measuring means, its own temperature has not reached a predetermined value, when the system is initiated. With this gyro, its output is unstable at the low temperatures, and to obtain the correct output value by enabling the temperature to reach predetermined value along with the self-heating caused by the electric power being supplied to the system, a desired amount of time is required.

As described above, position measuring system comprised of the GPS receiver 4, the gyro 6 and the transit distance sensor 7 can not measure the current position correctly immediately after the electric power is supplied to the system.

EP-A-0735380 discloses a mobile system with a positioning stopper and clock section associated therewith. US-A-4535334 discloses a vehicle positioning measurement and display system. WO-A-9953272 discloses a vehicle navigation system with improved power-up performance.

In view of the above, an object of the present invention is to eliminate the above problems with the conventional system.

In order to achieve the object, there is provided a mobile system according to the appended claims.
Fig. 1 is a block diagram for explaining the improvements in a vehicle mounted navigation system according to one embodiment of the present invention;
Fig. 2 is a flowchart showing the operation control in the vehicle mounted navigation system according to the embodiment of the invention and
Fig. 3 is a block diagram for explaining the conventional vehicle mounted navigation system.

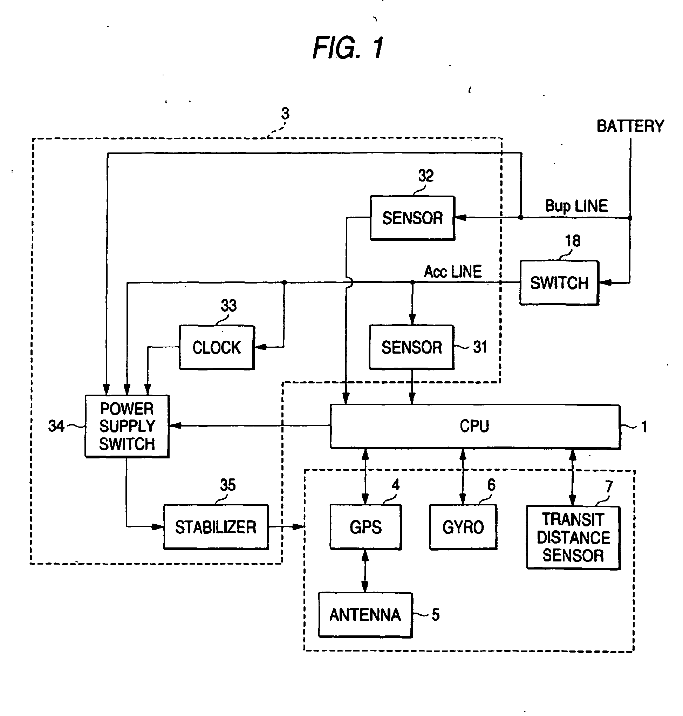

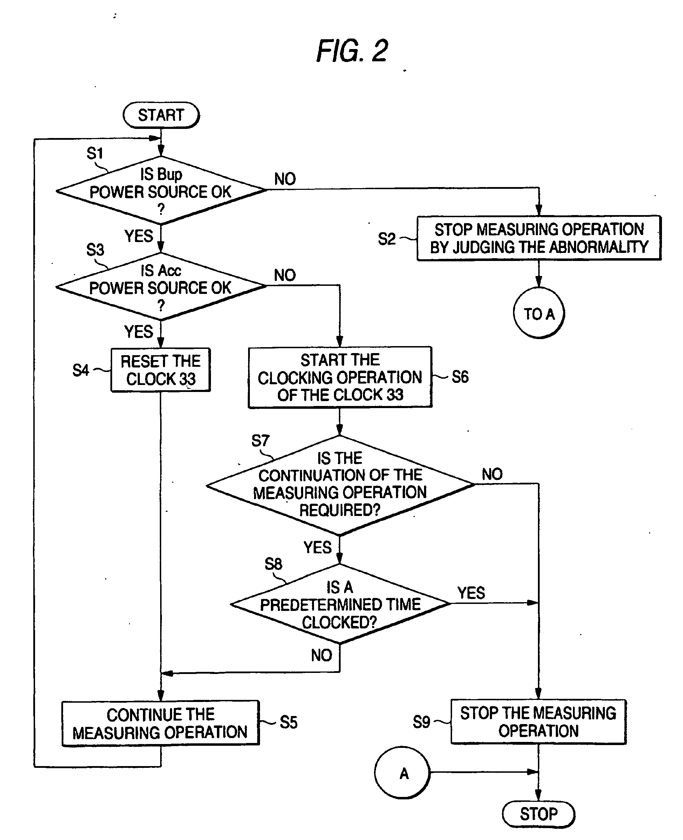

The preferred embodiments of the present invention will be described below with reference to Figs. 1 and 2.

Fig. 1 is a block diagram showing the configuration of an embodiment of the invention. This embodiment has fundamentally the same configuration as that of the conventional vehicle mounted navigation system as shown in Fig. 3, except that particularly, a CPU 1, a power source 3, a GPS receiver 4, a GPS antenna 5, a gyro 6, and a transit distance sensor 7 are improved. The improved parts are shown in detail in Fig. 1. In Fig. 1, the GPS receiver 4, the GPS antenna 5, the gyro 6, and the transit distance sensor 7 have the same internal configuration and operation as those of Fig. 3, and the detailed explanation of them is omitted.

A switch 18 is an accessory switch mounted on the vehicle . This switch 18 is turned on or off by the operation of the user starting an engine start key. A power source line following this switch is referred to as an accessory power source line (hereinafter referred to as an Acc line).

A sensor 31 is provided on the Acc line to examine whether or not the voltage value of power supplied from this Acc line has reached a predetermined value or greater. Thereby, the power-on or off of the switch 18 is detected, a detected result being output to the CPU 1. A sensor 32 is provided on a back-up line (hereinafter referred to as a Bup line) directly connected to a battery without interposition of the switch 18, and examines whether the voltage value of power supplied from the Bup line has reached a predetermined value or greater, thereby detecting whether or not the Bup line is connected to the battery, its detected result being output to the CPU 1.

A clock 33 is provided on the Acc line, and reset at the time when the switch 18 is turned on to supply the power through the Acc line. And the clock 33 starts to clock at the time when the switch 18 is turned off to shut the supply of power through the Acc line.

A power supply switch 34 receives the output from the clock 33 and the CPU 1, and supplies the power supplied from the Bup line to position measuring means (indicated by the dashed line) comprising the GPS receiver 4, the GPS antenna 5, the gyro 6, and the transit distance sensor 7 via a stabilizer 35 composed of a stabilizing circuit.

The operation of the vehicle mounted navigation system configured in the above way will be described below with reference to an operation flowchart of Fig. 2. This operation flowchart shows an operation control of the CPU 1 which is performed in accordance with a program prestored in the ROM 2 (see Fig. 3) of this system, or a program stored in the disk recording medium 10, which is transferred and memorized into the RAM 8 after initiating the system.

This program is executed at the time when the switch 18 is turned on after initiating the main system and the supply of power through the Acc line is shut off. Then, the main operations such as the disk drive 19 reading the information from the disk recording medium, the LCD 12 displaying various kinds of messages, and the sound recognition means 15 recognizing the voice words are stopped.

Firstly, at step S1, it is determined whether or not the power from the Bup power source line is supplied. This can be made by the sensor 32 sensing the voltage value of power supplied from the Bup power source line. If it is determined that the power from the Bup power source line is not supplied (No) at step S1, the procedure proceeds to step S2, where the measuring operation of the current position is stopped, judging that the power supply from the Bup power source line is abnormal. The abnormality of the power supply from the Bup power source line means, for example, a condition where the power is not supplied due to disconnection of the Bup power source line itself, and a condition where the voltage value of power supplied does not reach a required level due to decreased ability of power supply of the battery. And the procedure transfers to (A) after stopping the position measuring operation at step S2. Then, this program is ended and the control operation is stopped.

If it is determined that the power from the Bup power source line is supplied (Yes) at step S1, the procedure transfers to step S3 to determine whether or not the power from the Acc line is supplied. This determination can be made by the sensor 31 sensing the voltage value of power supplied from the Acc line. If it is determined that the power from the Acc line is supplied (Yes) at step S3, the procedure transfers to step S4 to reset the clocking of the clock 33. Then, proceeding to step S5, the measuring operation of the current position is continued. And the procedure gets back to step S1.

In this way, if it is determined that the power from the Bup power source line is supplied at step S1 and the power from the Acc power source line is also supplied at step S3, the CPU 1 controls the power supply switch 34 to supply the power supplied from the Bup power source line to position measuring means (indicated by the dashed line) comprising the GPS receiver 4, the GPS antenna 5, the gyro 6 and the transit distance sensor 7 via the stabilizer 35 composed of the stabilizing circuit to enable the position measuring means to continue the measuring operation of the current position. This processing flow corresponds to the case where the switch 18 is once turned off, and then turned on again during the measuring operation of the position measuring means.

Then, if it is determined that the power from the Acc power source line is not supplied (No) at step S3, the procedure transfers to step S6. This processing flow corresponds to the case where the switch 18 is turned off, and then is not turned on during the measuring operation of the position measuring means. In this case, at step S6, the clocking operation of the clock 33 is started. Then, at step S7, it is determined whether or not the measuring operation of the current position is required to be continued. This determination is made by the CPU 1, the conditions for judging that the measuring operation is required to be continued, viz., it is required that the power is continually supplied to the positionmeasuringmeans, include a case where the self-temperature of the gyro is lower than a predetermined temperature to get the correct output, a case where the vehicle is possibly moving because there is the output from the gyro sensor continually, and a case where if the measuring operation of the GPS receiver 4 is stopped immediately, it may take a lot of time for the GPS receiver 4 to supplement the GPS satellites at the next time.

Under these conditions, if it is determined that the CPU 1 needs the measuring operation to be continued at step S7, the procedure transfers to step S8 to determine whether or not the clocking of the clock 33 has reached a predetermined time. If it is determined that there is less than the predetermined time after starting to clock (No) at step S8, the procedure transfers to step S5 to continue the measuring operation of the current position. And the procedure gets back to step S1.

On the other hand, if it is determined that the predetermined time is reached after starting to clock (Yes) at step S8, the procedure transfers to step S9 to stop the measuring operation of the current position. Transferring to step S9, to stop the position measuring means to make the measuring operation of the current position, the power supply switch 34 stops to supply the power supplied from the Bup line to the position measuring means (indicated by the dashed line) comprising the GPS receiver 4, the GPS antenna 5, the gyro 6, and the transit distance sensor 7.

In this way, if the clock 33 determines that the predetermined time has elapsed after starting to clock, the procedure transfers to step S9 to stop the measuring operation of the current position. For this reason, even when the CPU 1 judges the continuation of the measuring operation to be required (step S7), the measuring operation can be compulsorily (preferentially) stopped. Thereby, even in the case where the CPU 1 fails in the control operation, the measuring operation can be stopped to prevent the power consumption (decreased power of the battery) due to unnecessary measuring operation.

If the CPU 1 judges that the continuation of the measuring operation is not required (No) at step S7, the procedure transfers to step S9, where to stop the measuring operation of the current position, the CPU 1 controls the power supply switch 34 to stop the power supplied from the Bup line to the position measuring means (indicated by the dashed line) comprising the GPS receiver 4, the GPS antenna 5, the gyro 6, and the transit distance sensor 7, and the program is ended.

In the embodiment as described above, the power supply switch 34 as a hardware is provided, and determines the state of the system from an input signal to selectively supply the power to the position measuring means, but this determination may be effected by the CPU 1 detecting the state of the system.

A program for the control operation of the system in the embodiment as described above may be memorized in the ROM 2.

Alternatively, the program may be stored in the disk recording medium 10. In this case, in the vehicle mounted navigation system having this disk recording medium 10, the same operation can be embodied.

In the above embodiment, the vehicle mounted navigation system has been explained, but the configuration and operation of the invention is not limited to the vehicle mounted navigation system, and may be applied to the overall mobile units such as the ship and airplane.

In the mobile system mounted on the mobile unit according to the present invention, the position measuring operation of the position measuring means can be continued after stopping the main operation of the mobile system, thereby measuring the current position of the mobile unit. Therefore, since the current position of the mobile unit can be measured after stopping the vehicle engine (turning off the switch 18), the orientation of the vehicle can be sensed by the gyro 6, when the vehicle is placed on a turn table of the sky park and moved.

In the case where the system operation is resumed immediately after stopping the main operation of the mobile system, since the measuring operation is performed continually from stopping the main operation of the mobile system to resuming, the measuring operation of the GPS receiver 4 is continually performed, whereby the current position can be obtained immediately after resuming the system operation.

## Claims

1. A mobile system which is mounted on a mobile unit, comprising:
a position measuring section (4, 6, 7) for measuring the position of the mobile unit;
a controller (1) for controlling the position measuring section to continue the position measuring operation after detecting the stopping of a main operation of the mobile system; and
a positioning stopper for stopping the position measuring operation under the control of the controller;
wherein the positioning stopper comprises a clock section (33) which starts the clocking after detecting the stopping of the main operation of the mobile system; and **characterised in that**:
the controller (1) judges whether the position measuring operation is required to be continued, or not, and:
if the controller judges that the position measuring operation is not required, the controller controls the positioning stopper to stop the position measuring operation
if the controller judges that the position measuring operation is required, the controller controls the position measuring section to continue the position measuring operation until a predermined time, when the positioning stopper stops the position measuring operation.

2. The mobile system according to claim 1, further comprising an operation stop detector (31) for detecting the stop of the main operation of the mobile system;
wherein the operation stop detector is provided on a power line for supplying an electric power to the mobile system.

3. The mobile system according to claim 1, wherein the controller (1) judges that the position measuring operation is required to be continued when at least one of conditions is satisfied, the conditions including:
a self-temperature of a gyro (6) is less than a predetermined temperature required for a correct output;
the mobile unit is possibly moving because there is a continued output from a gyro sensor; and
a time for the GPS receiver to supplement GPS satellites at a next time is delayed if the measuring operation of the GPS receiver (4) stops immediately.

## Patentansprüche

1. Mobiles System, das an einer mobilen Einheit befestigt ist, umfassend:
einen Positionsmessteil (4, 6, 7) zum Messen der Position der mobilen Einheit,
einen Kontroller (1) zum Steuern des Positionsmessteils, um den Positionsmessbetrieb nach dem Erfassen der Unterbrechung einer Hauptfunktion des mobilen Systems fortzusetzen, und
eine Positionierungs-Unterbrechungseinrichtung zum Unterbrechen des Positionsmessbetriebs entsprechend der Steuerung durch den Kontroller,
wobei die Positionierungs-Unterbrechungseinrichtung einen Zeitgeberteil (33) umfasst, der nach dem Erfassen der Unterbrechung der Hauptfunktion des mobilen Systems mit der Zeiterfassung beginnt, und **dadurch gekennzeichnet, dass**
der Kontroller (1) festlegt, ob es erforderlich ist, den Positionsmessbetrieb fortzusetzen oder nicht, und
wenn der Kontroller festlegt, dass der Positionsmessbetrieb nicht erforderlich ist, der Kontroller die Positionierungs-Unterbrechungseinrichtung steuert, um den Positionsmessbetrieb zu unterbrechen,
wenn der Kontroller festlegt, dass der Positionsmessbetrieb erforderlich ist, der Kontroller den Positionsmessteil steuert, um den Positionsmessbetrieb bis zu einem vorgegebenen Zeitpunkt, zu dem die Positionierungs-Unterbrechungseinrichtung den Positionsmessbetrieb unterbricht, fortzusetzen.

2. Mobiles System nach Anspruch 1, des Weiteren einen Funktionsunterbrechungsmelder (31) zum Melden der Unterbrechung der Hauptfunktion des mobilen Systems umfassend,
wobei der Funktionsunterbrechungsmelder auf einer Stromleitung zum Zuführen von elektrischem Strom zu dem mobilen System bereitgestellt ist.

3. Mobiles System nach Anspruch 1, wobei der Kontroller (1) festlegt, dass das Fortsetzen des Positionsmessbetriebs erforderlich ist, wenn wenigstens eine der Bedingungen erfüllt ist, die Bedingungen schließen ein:
eine Eigentemperatur eines Kreisels (6) ist niedriger als eine für eine richtige Ausgabe erforderliche vorgegebene Temperatur,
die mobile Einheit bewegt sich möglicherweise, weil eine kontinuierliche Ausgabe von einem Kreiselsensor vorhanden ist, und
eine Zeit für den GPS-Empfänger zum Ergänzen von GPS-Satelliten beim nächsten Mal verzögert ist, wenn der Messbetrieb des GPS-Empfängers (4) sofort unterbrochen wird.

## Revendications

1. Système mobile qui est monté sur une unité mobile, comprenant :
une section de mesure de position (4, 6, 7) destinée à mesurer la position de l'unité mobile,
un contrôleur (1) destiné à commander la section de mesure de position pour qu'elle continue l'action de mesure de position après la détection de l'arrêt d'un fonctionnement principal du système mobile, et
un dispositif d'arrêt de positionnement destiné à arrêter l'action de mesure de position sous la commande du contrôleur,
dans lequel le dispositif d'arrêt de positionnement comprend une section d'horloge (33) qui commence le chronométrage après la détection de l'arrêt du fonctionnement principal du système mobile, et **caractérisé en ce que** :
le contrôleur (1) évalue si l'action de mesure de position doit être continuée ou non, et :
si le contrôleur évalue que l'action de mesure de position n'est pas requise, le contrôleur commande le dispositif d'arrêt de positionnement pour qu'il arrête l'action de mesure de position,
si le contrôleur évalue que l'action de mesure de position est requise, le contrôleur commande la section de mesure de position pour qu'elle continue l'action de mesure de position jusqu'à un instant prédéterminé, lorsque le dispositif d'arrêt de positionnement arrête l'action de mesure de position.

2. Système mobile selon la revendication 1, comprenant en outre un détecteur d'arrêt de fonctionnement (31) destiné à détecter l'arrêt du fonctionnement principal du système mobile,
dans lequel le détecteur d'arrêt de fonctionnement est prévu sur une ligne d'alimentation destinée à fournir une alimentation électrique au système mobile.

3. Système mobile selon la revendication 1, dans lequel le contrôleur (1) évalue que l'action de mesure de position doit être continuée lorsqu'au moins une des conditions est satisfaite, les conditions comprenant :
une température propre d'un gyroscope (6) est inférieure à une température prédéterminée requise pour une sortie correcte,
l'unité mobile est éventuellement en déplacement car il existe une sortie continue du capteur gyroscopique, et
un instant pour que le récepteur de système GPS complète les satellites de système GPS une prochaine fois est retardé si l'action de mesure du récepteur de système GPS (4) s'arrête immédiatement.
